# EUROPÄISCHE PATENTSCHRIFT

(11) **EP 2 638 630 B1**
(45) Veröffentlichungstag und Bekanntmachung des Hinweises auf die Patenterteilung: **24.09.2014**
(21) Anmeldenummer: 11817310.3
(22) Anmeldetag: 09.11.2011
(51) Int. Cl.: H02P 8/12, H02P 8/16, H02P 8/34, H02P 6/12, H02P 6/18

(54) **VERFAHREN UND SCHALTUNGSANORDNUNG ZUR SENSORLOSEN MOTORLASTERFASSUNG UND ZUR LASTWERTABHÄNGIGEN MOTORSTROMREGELUNG BEI EINEM SCHRITTMOTOR**
METHOD AND CIRCUIT ARRANGEMENT FOR DETECTING MOTOR LOAD WITHOUT SENSORS AND FOR CONTROLLING MOTOR CURRENT ACCORDING TO THE LOAD ANGLE FOR A STEPPER MOTOR
PROCÉDÉ ET CIRCUITERIE POUR LA DÉTECTION SANS CAPTEUR DE LA CHARGE MOTEUR ET POUR LA RÉGULATION DU COURANT MOTEUR EN FONCTION DE LA VALEUR DE CHARGE POUR UN MOTEUR PAS À PAS

(30) Priorität: 08.02.2011 DE 102011000569; 09.11.2010 DE 102010060466
(43) Veröffentlichungstag der Anmeldung: 18.09.2013
(73) Patentinhaber: Trinamic Motion Control GmbH & Co. KG, 22769 Hamburg (DE)
(72) Erfinder: LARSSON, Lars, 20249 Hamburg (DE); DWERSTEG, Bernhard, 25462 Rellingen (DE)
(74) Vertreter: Heun, Thomas
(86) Internationale Anmeldenummer: PCT/DE2011/075263
(87) Internationale Veröffentlichungsnummer: WO 2012/062310

(56) Entgegenhaltungen:
- EP-A1- 0 693 816
- EP-A1- 1 345 316
- DE-A1-102008 001 408
- JP-A- 2002 281 788
- US-A1- 2006 049 791

## Beschreibung

Die Erfindung betrifft ein Verfahren und eine Schaltungsanordnung, mit dem/der bei einem Schrittmotor ein Lastwinkel des Motors sensorlos erfasst werden kann, um daraus ggf. die Höhe einer an der Motorwelle anliegenden mechanischen Last (Motor-Lastwert) zu bestimmen. Die Erfindung betrifft ferner ein Verfahren und eine Schaltungsanordnung, mit dem/der der Motorstrom eines Schrittmotors lastwinkelabhängig oder lastwertabhängig so geregelt werden kann, dass der Stromverbrauch des Motors möglichst gering ist. Die Erfindung ist sowohl für 2-Phasen-, als auch für 3- und Mehrphasen-Schrittmotoren anwendbar.

Schrittmotoren werden üblicherweise unabhängig von einer momentanen tatsächlichen Motorlast, d.h. einem aufzubringenden Drehmoment, so angesteuert und mit Strom beaufschlagt, dass sie beim Auftreten einer bei einer bestimmten Anwendung zu erwartenden höchsten Motorlast ein ausreichendes Drehmoment erzeugen. Folglich werden bei solchen Anwendungen nur zwei Lastsituationen unterschieden, nämlich der Stillstand und der Betrieb des Motors.

Da das Drehmoment und das Haltemoment eines Schrittmotors in weiten Bereichen proportional zu dem RMS- (root mean square) Wert des Motorstroms, multipliziert mit dem Sinus des Lastwinkels ist, wird der Motor in den meisten Situationen mit einem im Verhältnis zur momentanen tatsächlichen Motorlast viel zu hohen Motorstrom, d.h. einer viel zu hohen Drehmomentreserve betrieben. Wird der Motor z.B. mit einer mittleren Drehmomentreserve von 100% betrieben, d.h. mit einem Motorstrom, der doppelt so hoch wie notwendig ist, so ergibt sich, da die Verlustleistung des Motors proportional zu dem Quadrat des Motorstroms ist, eine um den Faktor vier höhere statische Verlustleistung. Da die entnommene mechanische Leistung bei Schrittmotoren oft gering gegenüber der statischen Verlustleistung ist, kann mit eigentlich unnötigen Energieverlusten im Bereich von 100 bis 300% gerechnet werden. Eine Verminderung dieser Verluste wäre zwar bei Anwendung von Drehsensoren (Positionssensoren, Drehgebern, Drehwinkelsensoren) mit entsprechender Auswertung der Drehstellungen des Rotors möglich. Dieses Konzept wird jedoch für eine Vielzahl solcher kostensensitiver Schrittmotoranwendungen abgelehnt, bei denen der Schrittmotor als rein vorwärts gesteuerter Antrieb verwendet wird und bei denen somit solche oder andere Drehsensoren nicht erforderlich sind.

Aus der US 2006/0049791 A1 ist ein Verfahren und eine Schaltungsanordnung zum Betreiben von Schrittmotoren bekannt, bei dem/der zwischen einer ersten Betriebsart für normalen Motorbetrieb und einer zweiten Betriebsart zur Erkennung eines Betriebszustandes des Motors, wie z.B. dessen Last, umgeschaltet werden kann. Das Verfahren und die Schaltungsanordnung ist insbesondere zur sensorlosen Bestimmung einer Referenzposition des Motors durch Fahren des Motors gegen einen mechanischen Anschlag vorgesehen, wobei die dadurch verursachte mechanische Lasterhöhung als veränderter Betriebszustandes in der zweiten Betriebsart erfasst wird.

Eine allgemeine Aufgabe, die der Erfindung zugrunde liegt, besteht deshalb darin, nach einer Möglichkeit zu suchen, den Stromverbrauch eines Schrittmotors zu senken, und zwar insbesondere dadurch, dass dieser in Abhängigkeit von der Höhe einer momentanen, tatsächlich anliegenden mechanischen Motorlast oder eines Lastwinkels nur mit so viel Strom versorgt wird, wie er zum Aufbringen des dafür erforderlichen Drehmoments gerade benötigt.

Der Erfindung liegt somit einerseits die Aufgabe zugrunde, ein Verfahren und eine Schaltungsanordnung zu schaffen, mit dem/der die Höhe einer momentanen, tatsächlich an einem Schrittmotor anliegenden mechanischen Last (Lastwert) oder ein Lastwinkel des Motors sensorlos ermittelt werden kann, um damit zum Beispiel den Motor in der Weise ansteuern zu können bzw. anzusteuern, dass dessen Stromverbrauch möglichst gering ist.

Andererseits liegt der Erfindung die Aufgabe zugrunde, ein Verfahren und eine Schaltungsanordnung zu schaffen, mit dem/der ein Schrittmotor in Abhängigkeit von einer momentanen, tatsächlich an dem Schrittmotor anliegenden mechanischen Last (Lastwert) oder einem Lastwinkel des Motors so betrieben werden kann, dass der Stromverbrauch des Motors möglichst gering ist.

Gelöst werden diese Aufgaben mit einem Verfahren gemäß Anspruch 1 bzw. 13 und einer Schaltungsanordnung gemäß Anspruch 9 bzw. 16.

Ein besonderer Vorteil dieser Lösungen besteht darin, dass sie in relativ einfacher Weise als Bestandteil einer bekannten Schrittmotor-Ansteuerschaltung realisiert werden können, ohne dass Änderungen am mechanischen Aufbau des Motors oder zusätzliche mechanische Komponenten wie z.B. Drehsensoren erforderlich sind.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten, beispielhaften Ausführungsformen anhand der Zeichnung. Es zeigt:
- Fig. 1: Schaltbilder mit verschiedenen Spulenstromphasen in einer Motorspule während eines Chopperbetriebes;
- Fig. 2: ein Diagramm der zeitlichen Zusammenhänge und Verläufe einer an einem Motor anliegenden Last, einem sich daraus ergebenden Lastwinkel sowie einem damit geregelten Motorstrom; und
- Fig. 3: ein Prinzipschaltbild einer Schrittmotor-Ansteuereinheit mit den zur Durchführung der erfindungsgemäßen Verfahren wesentlichen Komponenten.

In der folgenden Beschreibung wird zur besseren Verdeutlichung teilweise auf einen 3-Phasen-Motor Bezug genommen. Die diesbezüglichen und alle anderen Erläuterungen gelten aber entsprechend auch für Motoren mit einer anderen, insbesondere höheren Anzahl von Phasen oder 2-Phasen-Motoren.

Zunächst sollen die grundsätzlichen Abläufe des erfindungsgemäßen Verfahrens beschrieben werden, die nicht auf die beschriebenen Ausführungsformen beschränkt sondern auch für andere Ausführungsformen der Erfindung gültig sind.

Erfindungsgemäß wird von der Tatsache Gebrauch gemacht, dass der Lastwinkel eines Motors, d.h. der Winkel zwischen dem Rotor des Motors und der Hauptrichtung des von den Motorspulen jeweils erzeugten magnetischen Feldes mit steigender (mechanischer) Motorlast ebenfalls ansteigt.

Die Richtung des Rotors ist dabei durch die Richtung seiner Magnetisierung definiert. Ohne mechanische Last ist der Winkel des Rotors gleich der Hauptrichtung des von den Spulen erzeugten Magnetfeldes - dies entspricht einem Lastwinkel von 0°. Ist bei einem zweipoligen Motor die Richtung der Magnetisierung des Rotors orthogonal zur Hauptrichtung des von den Spulen erzeugten Magnetfeldes, so entspricht dies einem Lastwinkel von 90°. Bei einem zweipoligen Motor entspricht der Lastwinkel bei stehendem Motor direkt der vom Drehmoment an der Motorachse verursachten mechanischen Auslenkung um die Ruhelage (ohne Last mit Lastwinkel 0°). Bei höher-poligen Motoren ist der Lastwinkel ein ganzzahliges Vielfaches dieser mechanischen Auslenkung um die Ruhelage. Die Bestimmung des Lastwinkels würde daher bei höher- und hochpoligen Motoren, die eine entsprechend feinere Schrittauflösung aufweisen, sehr hochauflösende Drehgeber und sehr präzise Strommessungen erfordern.

Die erfindungsgemäße Bestimmung der Höhe der mechanischen Motorlast (auch Last oder Lastwert genannt), die durch den Lastwinkel repräsentiert wird und aus diesem ermittelt werden kann, beruht auf der durch die Drehung des Rotors in den Motorspulen gegeninduzierten Spannung (Gegen-EMK) und insbesondere darauf, wie hoch der Betrag dieser Gegen-EMK ist. Die Gegen-EMK überlagert sich nämlich mit der an die Motorspulen angelegten Spannung und erzeugt dadurch eine der Höhe der Gegen-EMK entsprechende Verschiebung der Phase der an einer Motorspule erzeugten und somit tatsächlich an dem betreffenden Motor-Spulenanschluss anliegenden Spannung (Motorspannung) und beeinflusst dadurch wiederum den Spulenstrom, sodass der tatsächliche Spulenstrom ohne Gegenmaßnahmen nicht mehr mit dem gewünschten Ziel- oder Sollstrom übereinstimmen würde.

Der Spulenstrom wird üblicherweise mittels eines bekannten Choppers bzw. einer bekannten Chopper-Steuerung (d.h. Chopper-Verfahren) aus einem für jede Motorspule zugeführten, im allgemeinen sinusförmigen Soll- oder Ziel- Spulenstromverlauf (Stromvorgabe) sowie mittels einer Motor-Versorgungsspannung so in die Motorspulen eingeprägt, dass der tatsächliche (Ist-) Spulenstrom und die Stromvorgabe in jeder Motorspule zumindest weitgehend identisch sind. Der Chopper dient dabei dazu, zum Beispiel eine oder mehrere Brückenschaltungen, über die jeweils eine der Motorspulen mit der Motor-Versorgungsspannung verbindbar ist, durch entsprechende Einstellung der Chopperzyklen, d.h. insbesondere des Tastverhältnisses der Chopper-Phasen, so zu schalten, dass durch Anlegen bzw. Trennen oder Umpolen der betreffenden Spule an die bzw. von der Motor-Versorgungsspannung jeweils ein tatsächlicher Spulenstrom in die Spule eingeprägt wird, der hinsichtlich seiner Stromrichtung, Stromhöhe und Stromform (im Mikroschrittbetrieb üblicherweise eine Sinus-Form) der jeweiligen Stromvorgabe (Sollstrom) möglichst weitgehend entspricht und insbesondere unabhängig bzw. unbeeinflusst von der Gegen-EMK des Motors ist, um damit den Rotor anzutreiben. Die tatsächlichen Spulenstromverläufe werden dabei zum Beispiel mit einem Messwiderstand am Fußpunkt der jeweiligen Brückenschaltung (oder auf andere Weise) erfasst und in Form einer am Messwiderstand abfallenden Spannung dem Chopper zugeführt, um durch einen Vergleich mit der Stromvorgabe die Chopperzyklen entsprechend einzustellen. Im folgenden wird daher, sofern nicht anders angegeben, davon ausgegangen, dass die tatsächlichen (Ist-) Spulenströme zumindest im Wesentlichen den vorgegebenen (Soll- oder Ziel-) Spulenströmen ("Stromvorgabe") gleich sind.

Grundsätzlich ist somit die für das Einprägen der (Soll-) Spulenströme erforderliche Einstellung der Chopperzyklen, d.h. des Tastverhältnisses der Chopper-Phasen, auch von der Gegen-EMK und damit von dem Lastwinkel des Motors abhängig, so dass diese Einstellung bzw. deren Veränderung zur sensorlosen Bestimmung des Lastwinkels bzw. dessen Veränderung herangezogen werden kann.

Weiterhin ist zu berücksichtigen, dass aus der mit den Chopperzyklen und der Motor-Versorgungsspannung Vcc an die Motor-Spulenanschlüsse angelegten Spannung eine zum Beispiel über einen Chopperzyklus zeitlich gemittelte Motorspannung an den Motor-Spulenanschlüssen erzeugt wird, die aufgrund der Induktivität der Spulen im Wesentlichen eine Effektivspannung darstellt. Im Folgenden wird daher auch von einer vorzugsweise über einen Chopperzyklus gemittelten bzw. effektiven Motorspannung gesprochen.

Wie oben bereits erwähnt wurde, wird also erfindungsgemäß der Motor-Lastwinkel anhand der durch die gegeninduzierte Spannung (Gegen-EMK) hervorgerufenen Phasenverschiebung der effektiven Motorspannung (an mindestens einem der z.B. drei Motor-Spulenanschlüsse) gegenüber dem Spulenstrom an diesem Motor-Spulenanschluss ermittelt.

Allerdings wird diese Phasenverschiebung und damit auch das Tastverhältnis der Chopper-Phasen (d.h. die Chopperzyklen) für die einzelnen Spulen im Allgemeinen nicht nur durch die Gegen-EMK, sondern auch durch andere Einflüsse wie zum Beispiel statische Motordaten, insbesondere den Innenwiderstand und die Induktivität der Motorspulen und die Versorgungsspannung und ggf. auch durch andere dynamisch auftretende Effekte beeinflusst.

Zur vorzugsweisen Beseitigung dieser Einflüsse werden erfindungsgemäß verschiedene Maßnahmen vorgeschlagen. Zunächst sollen jedoch noch einige Grundsätze und Begriffe erläutert bzw. definiert werden, die im Zusammenhang mit diesen Maßnahmen von Bedeutung sind.

Chopper-Verfahren sind allgemein bekannt, wobei drei verschiedenen Chopper-Phasen, nämlich ON-, FD- und ggf. SD-Phase unterschieden werden, deren Tastverhältnisse (d.h. deren zeitliche Längen) jeweils so aufeinander abgestimmt sind, dass der tatsächliche Strom durch die Motorspulen möglichst genau einem vorgegebenen Sollstrom (Stromvorgabe) für die betreffende Motorspule, also z.B. einer sinus- bzw. cosinus-Form, folgt und durch die Gegen-EMK und die genannten andere Einflüsse und Effekte nicht oder in einem für die praktische Anwendung nur unwesentlichem Maße verändert wird.

In der ON-Phase (auch positive Einschaltphase genannt) wird der Spulenstrom in eine Spule jeweils in Richtung der momentan vorgegebenen Polarität bzw. Richtung des Spulenstroms aktiv durch die Spule getrieben, so dass der Spulenstrombetrag relativ schnell und kontinuierlich ansteigt (Einschaltperiode). Die durch eine ON-Phase eingeprägte Spulenstromrichtung ist also gleich der momentanen Polarität bzw. Richtung des Spulenstroms.

Die Polarität des Spulenstromes ist dabei im Falle eines sinusförmigen Spulenstroms z.B. positiv im ersten und zweiten Quadranten und negativ im dritten und vierten Quadranten.

In der FD-Phase (negative Einschaltphase) wird der Spulenstrom entgegen der gerade vorgegebenen Polarität des Spulenstroms durch Umpolung der Spule und Rückspeisung des Spulenstroms in die Stromversorgung aktiv wieder abgebaut. Die FD-Phase dient dazu, den Spulenstrom insbesondere in den Phasen fallenden Spulenstrombetrages (d.h. während des zweiten und vierten Quadranten eines sinusförmigen Spulenstroms) relativ schnell abzubauen.

Als dritte Chopper-Phase ist die Rezirkulationsphase oder SD-Phase zu nennen, in der die betreffende Spule nicht aktiv angesteuert wird, sondern kurzgeschlossen bzw. gebrückt ist, so dass der Spulenstrom aufgrund des Innenwiderstandes der Spule und der Gegen-EMK nur allmählich (d.h. langsamer als während der FD-Phase) abfällt.

Diese drei Chopper-Phasen werden also durch den Chopper mit Hilfe von an dessen Ausgang anliegenden und einer Treiberschaltung zugeführten Chopper-Schaltsignalen (üblicherweise PWM-Signale) zeitlich so aktiviert, bemessen und kombiniert, dass der tatsächliche Spulenstrom über seinen gesamten (z.B. sinusförmigen) Verlauf, also während der steigenden und der fallenden Spulenstromphasen, möglichst zeitnah und genau der entsprechenden Stromvorgabe (Soll-Spulenstrom) folgt und insbesondere durch die durch den Rotor in den Motorspulen gegeninduzierte Spannung (Gegen-EMK) nicht (wesentlich) verändert wird.

Unter einem Chopperzyklus ist hier eine Abfolge jeweils einer ON-Phase, einer FD (Fast-Decay)- Phase sowie ggf. einer SD (Slow-Decay) -Phase zu verstehen.

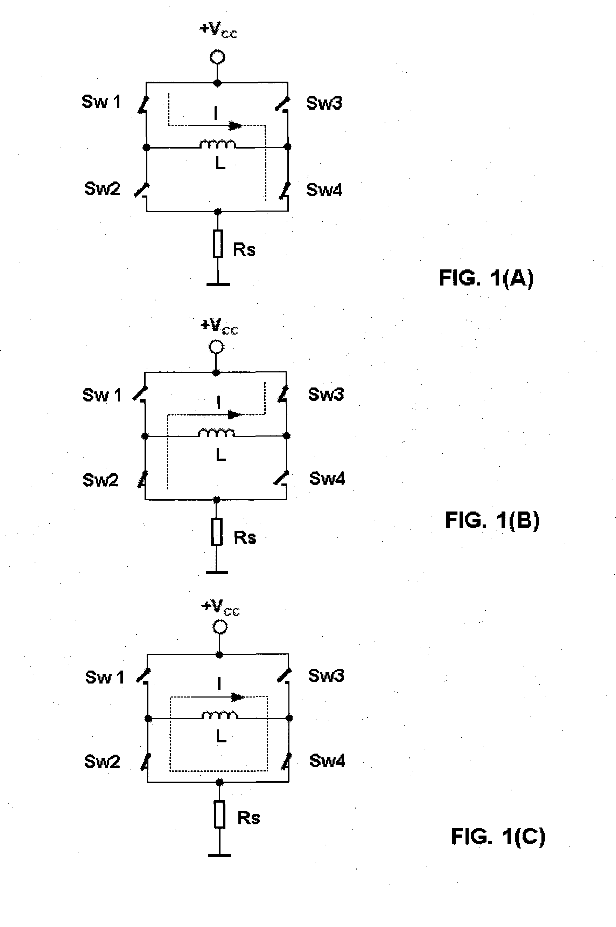

Die drei Chopper-Phasen sind schematisch in Figur 1(A), Figur 1(B) bzw. Figur 1(C) angedeutet. Diese drei Figuren zeigen jeweils eine Brückenschaltung aus einem ersten bis vierten Schalter Sw1, Sw2, Sw3, Sw4, wobei ein erster und ein zweiter Schalter Sw1, Sw2 sowie ein dritter und ein vierter Schalter Sw3, Sw4 jeweils in Reihe geschaltet und die beiden Reihenschaltungen parallel miteinander verbunden sind. Die betreffende Motorspule L ist mit den Mittelpunkten der Brückenzweige verbunden. Der Fußpunkt der Brückenschaltung ist typischerweise über einen Messwiderstand R_{S} zur Erfassung des tatsächlichen, in die Motorspule eingeprägten Motorstroms mit Masse verbunden, während der Kopf der Brückenschaltung an die Motor-Versorgungsspannung V_{CC} angeschlossen ist. Die Schalter Sw1, Sw2, Sw3, Sw4 werden dabei mittels einer Treiberschaltung geschaltet, der wiederum die Chopper-Schaltsignale zur Aktivierung der Chopper-Phasen zugeführt werden.

Figur 1(A) zeigt die Schalterstellungen und die daraus resultierende Richtung des Stromflusses I durch die Spule L in Richtung der Vorgabe während der oben genannten ersten oder ON-Phase, in der diese Richtung die gleiche ist wie die vorgegebene Richtung bzw. Polarität des Spulenstroms, wobei der erste und der vierte Schalter Sw1, Sw4 geschlossen und der zweite und der dritte Schalter Sw2, Sw3 geöffnet sind.

Figur 1(B) zeigt die Schalterstellungen und die daraus resultierende Umpolung der Spule L sowie die Rückspeisung des Spulenstroms I in die Spannungsversorgung U d.h. entgegen der vorgegebenen Richtung bzw. Polarität des Spulenstroms (die hier die gleiche ist wie in Figur 1(A)) während der oben genannten zweiten oder FD-Phase, in der der erste und der vierte Schalter Sw1, Sw4 geöffnet und der zweite und der dritte Schalter Sw2, Sw3 geschlossen sind.

Schließlich zeigt Figur 1(C) die dritte oder SD-Phase, bei der die Spule L kurzgeschlossen oder gebrückt ist, d.h. der zweite und der vierte Schalter Sw2, Sw4 sind geschlossen, während der erste und der dritte Schalter Sw1, Sw3 geöffnet sind (oder entsprechend umgekehrt), so dass sich der in der Spule L fließende Strom I entsprechend dem Innenwiderstand der Spule L allmählich abbaut, d.h. rezirkuliert.

Der Einfachheit halber wird für die folgenden Betrachtungen eine sinusförmige Strom-Ansteuerung der Spulen angenommen, d.h. bei einem 3-Phasen-Schrittmotor wird eine der Spulen mit einem sinusförmigen Stromverlauf und die beiden anderen Spulen mit jeweils einem dagegen um 120° bzw. um 240° verschobenen sinusförmigen Stromverlauf beaufschlagt. Die folgenden Betrachtungen gelten jedoch bei nicht-sinusförmiger Ansteuerung und/oder Schrittmotoren mit einer anderen Anzahl von Phasen und der damit verbundenen anderen Phasenverschiebung der ansteuernden Spulenströme relativ zueinander entsprechend.

Wie oben bereits erwähnt wurde, wird die genannte Phasenverschiebung neben der durch die Motorlast hervorgerufenen Gegen-EMK auch durch weitere, insbesondere von dem betreffenden Motor abhängige Parameter und Effekte wie zum Beispiel die Versorgungsspannung, die Induktivität und den Innenwiderstand des Motors usw. beeinflusst. Zur Vermeidung der damit verbundenen Ungenauigkeit der Lastwinkelmessung wird die oben genannte Phasenverschiebung und somit der Lastwinkel vorzugsweise zu einem charakteristischen Zeitpunkt gemessen, der es ermöglicht, ein zumindest weitgehend stabiles und von den unerwünschten Parametern und Effekten unabhängiges Messergebnis zu erzielen.

Es hat sich gezeigt, dass solche charakteristischen Zeitpunkte insbesondere diejenigen Zeitpunkte sind, zu denen sich die Verläufe der effektiven Motorspannungen an zwei Motor-Spulenanschlüssen schneiden, d.h. den gleichen Momentanwert aufweisen. An diesen Schnittpunkten heben sich nämlich die oben genannten unerwünschten Effekte, die im Ergebnis insbesondere durch die absolute Höhe und die Form der Motorspannung hervorgerufen werden, aufgrund der Symmetrie des Motors nahezu auf.

Somit wird also vorzugsweise an einem Schnittpunkt der Verläufe von zwei der - im Falle eines 3-Phasenmotors - drei effektiven Motorspannungen an zwei der drei Motor-Spulenanschlüssen die Phasenverschiebung (und damit auch der Lastwinkel) zwischen einer dieser beiden sich schneidenden Motorspannungen und dem Spulenstrom an diesem (gleichen) Motoranschluss gemessen.

Für eine möglichst hohe Genauigkeit der Lastwinkelmessung ist die zeitlich exakte und möglichst wenig verrauschte Bestimmung eines solchen Schnittpunktes zwischen den (wie oben erläutert vorzugsweise über jeweils einen Chopperzyklus gemittelten und effektiven) Motorspannungen von besonderem Vorteil. Zu diesem Zweck dient vorzugsweise das folgende Verfahren:

Zur zeitlichen Bestimmung der Schnittpunkte jeweils zweier effektiver Motorspannungen (d.h. Motor-Spulenspannungen) werden zuerst die Zeitdauern der positiven aktiven Einschaltphasen der Chopperzyklen, d.h. die Zeitdauern der ON-Phasen, (oder alternativ dazu der negativen aktiven Einschaltphasen, d.h. der FD-Phasen, für die die nachfolgenden Erläuterungen entsprechend gelten) an vorzugsweise jedem Motoranschluss (d.h. Motor-Spulenanschluss) gemessen. Diese gemessenen Einschalt-Zeitdauern werden dann vorzugsweise mittels jeweils eines Akkumulators (insbesondere Akkumulationsregisters) für jeden der z.B. drei Motoranschlüsse gesondert, wie nachfolgend für zwei beispielhafte Ausführungsformen beschrieben, gleitend gemittelt.

Gemäß der bevorzugten ersten Ausführungsform werden die Zeitdauern der ON-Phasen (oder der FD-Phasen), von denen jeweils eine in jedem Chopperzyklus auftritt, nacheinander (d.h. während aufeinander folgender Chopperzyklen) aufakkumuliert. Dabei wird zum Beispiel nach jeder Addition jeweils einer Zeitdauer einer ON-Phase (bzw. FD-Phase) ein bestimmter Bruchteil des Akkumulatorinhaltes wieder subtrahiert. Diese Addition und Subtraktion wird vorzugsweise für jeden der zum Beispiel drei Motoranschlüsse getrennt und vorzugsweise während jedes Chopperzyklusses und somit für alle Chopperzyklen, d.h. für jede gemessene Zeitdauer einer ON-Phase (bzw. FD-Phase), wiederholt, so dass sich für jeden der (zwei oder drei oder mehr) Motor-Spulenanschlüsse jeweils ein gleitender Mittelwert der Einschalt-Zeitdauern ergibt.

Mit diesem Verfahren erhält man also einen gleitenden Mittelwert in dem Sinne, dass dieser proportional zu dem nach jeder Addition zu subtrahierenden Bruchteil des Akkumulatorinhaltes ist. Wenn zum Beispiel nach jeder Addition (d.h. in jedem Chopperzyklus) ein Prozent der bisher aufakkumulierten Zeitdauern der ON-Phasen wieder subtrahiert wird, entspricht der gleitende Mittelwert dem mit dem Faktor 100 multiplizierten arithmetischen Mittelwert. Wenn also zum Beispiel einhundert mal ein Wert von drei aufaddiert und nach jeder Addition ein Prozent des bis dahin aufakkumulierten Wertes wieder subtrahiert wird, so nähert sich der gleitende Mittelwert asymptotisch dem Wert 300 an.

Gemäß einer zweiten Ausführungsform kann auch eine Addition der aktiven Einschalt-Zeitdauern (ON- oder FD-Phasen) mit jeweils anschließender Division durch die Anzahl der aufaddierten Zeitdauern vorgenommen werden, um eine Normierung in Form eines gleitenden arithmetischen Mittelwertes zu erhalten.

Die Subtraktion des genannten Bruchteils des Akkumulatorinhaltes gemäß der ersten Ausführungsform erzeugt somit im Ergebnis gleitende Mittelwerte der Einschalt-Zeitdauern im Sinne einer zeitlichen Filterung, deren Filterzeitkonstante jeweils über die Höhe des in jedem Chopperzyklus zu subtrahierenden Bruchteils eingestellt und in der Weise zum Beispiel an die Frequenz der jeweiligen ansteuernden Sinuswelle des Motor-Sollstroms für den betreffenden Motoranschluss und damit an die Drehgeschwindigkeit des Motors angepasst werden kann, dass ein gewünschtes bzw. optimales Signal/Rauschverhältnis der gleitenden Mittelwerte der Einschalt-Zeitdauern für die Motor-Spulenanschlüsse erzielt und damit eine zeitlich exakte und wenig verrauschte Bestimmung des oben genannten Schnittpunktes möglich wird.

Grundsätzlich sollte die zeitliche Filterung bzw. die Zeitdauer der gleitenden Mittelwertbildung eine Bandbreite aufweisen, die vorzugsweise einerseits deutlich oberhalb der aktuellen Frequenz des Soll-Spulenstroms liegt, andererseits aber potentielle Störungen, die zum Beispiel durch Unzulänglichkeiten in der Stromregelung verursacht werden können, unterdrückt werden, sodass der Einfluss eines einzelnen Chopperzyklusses möglichst gering ist. Dies bedeutet, dass die Zeitdauer der gleitenden Mittelwertbildung vorzugsweise so eingestellt wird, dass über einen Bruchteil (von einigen Prozent bis hin zu wenigen 10 Prozent) der Anzahl der Chopperzyklen jeder elektrischen Periode des Soll-Spulenstroms gemittelt wird.

Anhand der durch die Drehrichtung bestimmten Ansteuersequenz eines zum Beispiel 3-Phasen-Motors mit drei wie oben erläutert phasenverschobenen Sinuswellen der Soll- oder Ziel-Spulenströme ist es bekannt, in welcher Reihenfolge sich die Schnittpunkte, d.h. die Gleichheiten von jeweils zwei der drei effektiven Motorspannungen an den Motoranschlüssen ergeben. Auf dieser Grundlage werden nun jeweils diejenigen beiden gleitenden Mittelwerte der Einschalt-Zeitdauern an denjenigen Motoranschlüssen miteinander verglichen, für die gemäß der Drehrichtung des Motors der nächste Schnittpunkt in der Ansteuersequenz der Soll-Spulenströme zu erwarten ist. Sobald diese beiden gleitenden Mittelwerte der Einschalt-Zeitdauern gleich sind und damit ein Schnittpunkt der vorzugsweise über jeweils einen Chopperzyklus gemittelten effektiven Motorspannungen detektiert ist, ist jeweils ein fixer Zeitpunkt dieser beiden Motorspannungen festgelegt.

Mit anderen Worten sind also an den gesuchten Schnittpunkten von den genannten jeweils zwei effektiven Motorspannungen auch die gleitenden Mittelwerte der ON-Phasen- oder Einschaltzeitdauern, mit denen diese beiden Motorspannungen erzeugt werden, zumindest im Wesentlichen gleich.

Prinzipiell kann also zum Zeitpunkt des Auftretens des wie oben beschrieben ermittelten Schnittpunktes zwischen zwei effektiven Motorspannungen an zwei Motoranschlüssen (d.h. Motor-Spulenanschlüssen) die Phasenverschiebung zwischen einer dieser beiden (gleichen) Motorspannungen an einem der beiden Motoranschlüsse und dem Spulenstrom an diesem Motoranschluss erfasst und daraus der Lastwinkel des Motors bestimmt werden:

Zum einen ist nämlich in dem Schnittpunkt die Phase der effektiven Motorspannung (die aufgrund der Gegen-EMK gegenüber dem Spulenstrom verschoben ist) bekannt, da ein solcher Schnittpunkt an definierten Phasenwinkeln auftritt. So schneidet sich zum Beispiel eine sin(x)- Spannung und eine sin(x+120°)-Spannung an zwei definierten Punkten in jeder elektrischen Periode, d.h. jeder Schnittpunkt zweier Spulenspannungen gehört zu einem festen Winkel innerhalb des Spannungsverlaufes. Somit ist also die Phasenlage der Motorspannung bekannt.

Zum anderen ist aber auch die Phasenlage des Spulenstromes bekannt, da dieser ja anhand des vorgegebenen Ziel- oder Soll-Spulenstromes in die Motor-Spulenanschlüsse eingeprägt wird. Damit kann also die Phasenlage der Motorspannung an einem Motoranschluss nun mit der Phasenlage des Spulenstroms an diesem gleichen Motoranschluss verglichen und aus der Differenz zwischen beiden der Lastwinkel ermittelt werden.

Vorzugsweise wird jedoch noch folgender Nebeneffekt berücksichtigt:

Die beschriebene zeitliche Filterung der Zeitdauern der ON-Phasen der Chopper-Steuerung erzeugt nämlich als Nebeneffekt eine zeitliche Verschiebung der gleitenden Mittelwerte und damit auch des genannten Schnittpunktes, d.h. sowohl die vor dem Schnittpunkt steigende als auch die vor dem Schnittpunkt fallende, über den Chopperzyklus gemittelte effektive Motorspannung wird aufgrund der Filterzeitkonstante gegenüber den tatsächlich an den Motoranschlüssen anliegenden effektiven Motorspannungen verzögert. Damit verzögert sich auch der Schnittpunkt um eben diesen Betrag. In Bezug auf den tatsächlichen Drehwinkel des Rotors zum Zeitpunkt der Detektion des Schnittpunktes (und damit des Lastwinkels) entsteht also ein Winkelfehler, der von der gewählten Filterzeitkonstante bzw. der Drehzahl des Motors abhängig ist. Dieser Winkelfehler sollte daher möglichst exakt korrigiert, oder aber bei der Bestimmung des Lastwinkels berücksichtigt werden. Eine gute Berücksichtigung dieses Winkelfehlers könnte realisiert werden, indem das beim Erreichen des Schnittpunktes auszulesende Lastwinkelsignal ebenso gefiltert wird. Da allerdings der Verlauf des Lastwinkels selbst nicht unbedingt sinusförmig ist, kann er nicht ohne weiteres entsprechend gefiltert werden.

Die vorgegebenen Ziel- oder Soll-Spulenströme sind hingegen sinusförmig, sodass sie bei der Korrektur des Winkelfehlers als Winkelreferenz verwendet werden können. Bei einem unbelasteten Motor (Lastwinkel 0°) korreliert der Schnittpunkt zweier Motorspannungen mit dem entsprechenden Schnittpunkt der beiden Motor-Spulenströme an den betreffenden Motoranschlüssen. Bei einem 3-Phasenmotor ist an dem Schnittpunkt zweier Motor-Spulenströme der dritte Motor-Spulenstrom im Minimum. Letzterer kann daher nicht gut für die Messung herangezogen werden, da seine Änderung zu diesem Zeitpunkt minimal ist. Der vom Betrag her fallende Motor-Spulenstrom bietet jedoch eine gute Referenz, da er im Falle eines 3-Phasenmotors noch 120° vom Minimum entfernt ist, d.h. er erlaubt prinzipiell die gewünschte Detektion eines Lastwinkels innerhalb des nominalen Lastwinkelbereiches von 0 bis 90°. Dabei kann sogar- unter Berücksichtigung der mit zunehmender Annährung an das Minimum bzw. Maximum der Sinuswelle abflachenden Steigung und damit geringeren Empfindlichkeit der Referenzierung - ein Lastwinkel von bis zu minus 30° bzw. bis zu plus 120° detektiert werden. Bei einem 2-Phasenmotor gilt Entsprechendes.

Der Lastwinkel wird also bevorzugt in der Weise ermittelt, dass an dem Schnittpunkt (bzw. der Gleichheit) zwischen der effektiven, über einen Chopperzyklus gemittelten und aufgrund der beschriebenen gleitenden Mittelwertbildung zeitlich gefilterten Motorspannung am Motoranschluss X (steigende Spannung) und derjenigen am Motoranschluss Y (fallende Spannung) der im Ergebnis identisch gefilterte Ziel- oder Soll-Spulenstrom für den Motoranschluss Y (der in seiner ungefilterten Form aufgrund des Chopper-Verfahrens mit dem tatsächlichen Spulenstrom an diesem Motoranschluss übereinstimmt) zu dem charakteristischen Zeitpunkt, d.h. dem Schnittpunkt der beiden Motorspannungen (der anhand der Gleichheit der gleitenden Mittelwerte der aktiven Einschaltzeitdauern an zwei Motoranschlüssen ermittelt wurde), ausgelesen wird.

Die Filterung bzw. zeitliche Verzögerung der jeweiligen Soll-Spulenströme erfolgt mit an sich bekannten Filtern in der Weise, dass diese dadurch die gleiche Phasenverschiebung bzw. zeitliche Verzögerung erleiden, wie die durch die oben erläuterte zeitliche Filterung der Einschalt-Zeitdauern ermittelten Schnittpunkte der Motorspannungen.

Es hat sich gezeigt, dass Schrittmotoren aufgrund von Anisotropien der Magnetpole bzw. deren Stellung zueinander im Bereich einer elektrischen Periode in einigen Fällen keine gleichmäßige Gegen-EMK erzeugen, sondern dass diese innerhalb einer elektrischen Periode im Bereich von mehreren Prozent schwanken kann. Diese Schwankung zeigt sich dann auch an den an unterschiedlichen Schnittpunkten der Motorspannungen gemessenen Lastwinkeln. Deshalb wird bevorzugt eine arithmetische Mittelung von mehreren, jeweils an unterschiedlichen Schnittpunkten der Motorspannungen ermittelten Lastwinkeln vorgenommen, durch die die oben beschriebene Motorlast- bzw. Lastwinkelmessung deutlich verbessert werden kann.

Nachdem also der Lastwinkel oder der gemittelte Lastwinkel wie oben beschrieben ermittelt worden ist, kann dieser zum Beispiel zur Ermittlung eines Motor-Lastwertes, zur Drehmomentmessung, zur Erkennung eines Anschlags, gegen den der Motor gelaufen ist, zur Erfassung mechanischer Motorfehler oder zu anderen Zwecken verwendet werden.

Eine besonders bevorzugte Anwendung des ermittelten Lastwinkels (oder des gemittelten Lastwinkels) ist jedoch die lastwinkelabhängige und damit die lastwertabhängige Regelung der Höhe der tatsächlichen Motor-Spulenströme, und zwar insbesondere in der Weise, dass der Motor stets nur so viel Strom verbraucht, wie er zum Erzeugen eines gewünschten Drehmomentes gerade benötigt. Zu diesem Zweck werden die tatsächlichen Motor-Spulenströme vorzugsweise so geregelt, dass der Lastwinkel stets möglichst groß und insbesondere so groß ist, dass gerade keine Schrittverluste am Motor auftreten. Insbesondere werden die tatsächlichen Motor-Spulenströme so geregelt, dass der Lastwinkel innerhalb eines bestimmten Bereiches bleibt, d.h. einerseits ausreichend hoch ist, um das Motor-Drehmoment zu erzeugen, das zum Drehen der an der Motorachse momentan anliegenden (mechanischen) Motorlast erforderlich ist, andererseits aber auch nicht wesentlich höher. Auf diese Weise kann die Verlustleistung des Motors gegenüber dem bekannten Betrieb bei stets maximalem Motorstrom erheblich gesenkt werden, ohne das Risiko von Schrittverlusten zu erhöhen.

Zur Regelung des tatsächlichen Spulenstroms für jede Motorspule wird vorzugsweise ein Regler verwendet, der einen ersten Komparator für eine obere Regelschwelle H, die bei einem hohen Lastwinkel gesetzt wird, sowie einen zweiten Komparator für eine untere Regelschwelle R, die bei einem niedrigen Lastwinkel gesetzt wird, aufweist, wobei zwischen beiden Regelschwellen der gewünschte Bereich des Lastwinkels liegt.

Dabei wird, wenn der Lastwinkel die obere Regelschwelle H überschreitet, der tatsächliche Motorstrom I (d.h. sämtliche Motor-Spulenströme) vorzugsweise relativ schnell hoch geregelt, d.h. innerhalb eines oder weniger Messzyklen des Lastwertes auf einen vorgegebenen maximalen Stromwert Imax erhöht, bis bei einem der nachfolgend gemessenen Lastwinkel L dieser die obere Regelschwelle H wieder unterschreitet und somit wieder entsprechend abfällt. Auf diese Weise kann der Motor schnell auf einen Lastanstieg reagieren, und das Risiko von Schrittverlusten durch Überschreiten eines maximalen Lastwinkels von z.B. 90° wird weiter vermindert.

Damit der Regler nicht instabil wird, wird hingegen, wenn der Lastwinkel L die untere Regelschwelle R unterschreitet, der tatsächliche Motorstrom I vorzugsweise nicht genauso schnell, sondern mit im Vergleich zum schnellen Hochregeln des Stroms kleineren Schritten, d.h. langsamer, wieder heruntergeregelt.

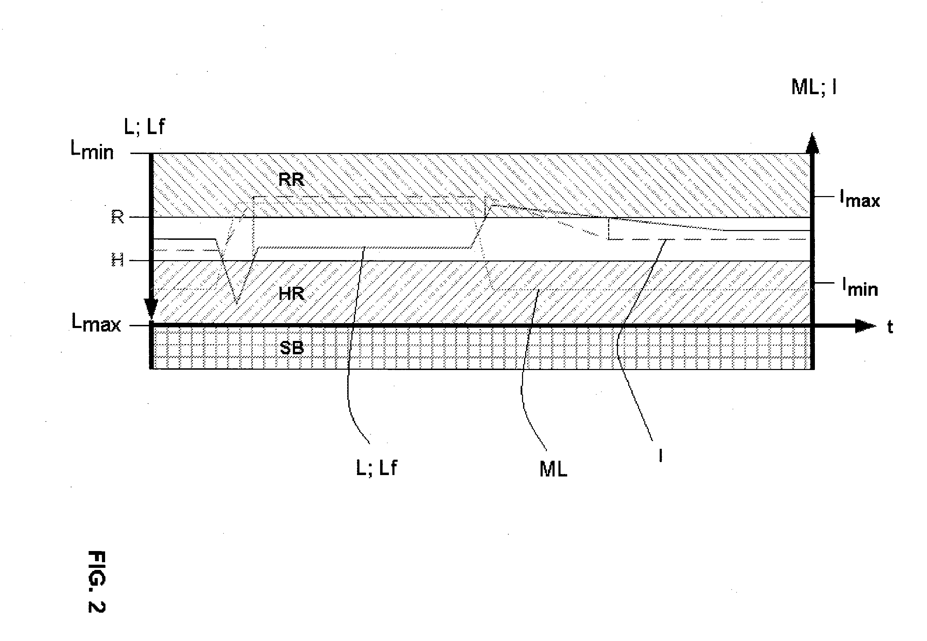

Im Einzelnen sind diese zeitlichen Verläufe des Lastwinkels und der Höhe des Motorstroms I sowie deren Zusammenhänge für dieses Regelverfahren im Diagramm der Figur 2 dargestellt, wobei auch ein angenommener Verlauf einer Motorlast ML eingezeichnet ist.

Auf der horizontalen Achse ist dabei die Zeit t und auf der linken vertikalen Achse der Lastwinkel L jeweils in Pfeilrichtung ansteigend aufgetragen, wobei ein minimaler Lastwinkel Lmin = 0° und eine maximaler Lastwinkel Lmax = 90° sein kann. Auf der rechten vertikalen Achse ist der tatsächliche Motor-Spulenstrom I für eine der Motorspulen sowie die Motorlast ML jeweils in Pfeilrichtung ansteigend aufgetragen.

Auf der linken vertikalen Achse ist ferner die obere Regelschwelle H sowie die untere Regelschwelle R für den Lastwinkel L eingezeichnet. Bei einem Lastwinkel Lmax liegt die im Verhältnis zum momentan eingestellten Motorstrom I maximale Motorlast an. Auf der rechten vertikalen Achse ist ein minimaler Motorstrom Imin und ein maximaler Motorstrom Imax markiert.

Weiterhin sind in diesem Diagramm drei Regelbereiche schraffiert angedeutet, nämlich ein erster Bereich (Hochregel-Bereich) HR, in dem der Motorstrom I erhöht wird, sowie ein zweiter Bereich (Runterregel-Bereich) RR, in dem der Motorstrom I vermindert wird. Schließlich ist auch ein Stallbereich SB des Motors angedeutet, der beim Überschreiten einer im Verhältnis zum momentan eingestellten Motorstrom maximalen Motorlast ML und damit beim Überschreiten des maximalen Lastwinkels Lmax erreicht wird und bei dem Schrittverluste des Motors auftreten können.

Die Kurve ML bezeichnet einen angenommenen zeitlichen Verlauf einer an der Motorwelle anliegenden mechanischen Motorlast. Die Kurve I bezeichnet den zeitlichen Verlauf der Höhe des Motorstroms, während die Kurve L einen angenommenen zeitlichen Verlauf des Lastwinkels (bzw. die Kurve Lf einen angenommenen zeitlichen Verlauf eines gemittelten Lastwinkels) darstellt, der, wie oben erläutert, durch die momentane Motorlast ML und den momentan eingestellten Motorstrom I bestimmt wird.

Wenn sich also gemäß Figur 2 die Motorlast ML erhöht, so steigt bei zunächst unverändertem tatsächlichen Motorstrom I der Lastwinkel L ebenfalls an. Wenn dabei der Lastwinkel L die obere Regelschwelle H nach oben überschreitet (und somit ein gesetzter hoher Lastwinkel überschritten wird), so wird der tatsächliche Motorstrom I wie oben erläutert relativ schnell erhöht, bis der Lastwinkel L die obere Regelschwelle H wieder nach unten unterschreitet und somit wieder in dem gewünschten Bereich liegt. Bei unverändert erhöhter Motorlast ML bleibt dann der Motorstrom I auf einem hohen oder maximalen Wert Imax konstant, bis die Motorlast ML wieder abfällt. Wenn dabei bei unverändert hohem Motorstrom Imax der Lastwinkel L die untere Regelschwelle R nach unten unterschreitet, so wird der Motorstrom I (wie oben erläutert relativ langsam) heruntergeregelt, bis der Lastwinkel L die untere Regelschwelle R wieder nach oben überschreitet und somit wieder in dem gewünschten Bereich liegt. Der Motorstrom I bleibt dann im wesentlichen konstant, und der Lastwinkel L (bzw. der gemittelte Lastwinkel Lf) liegt bei gleich bleibender Motorlast ML wieder in dem gewünschten Bereich zwischen der unteren und der oberen Regelschwelle R, H.

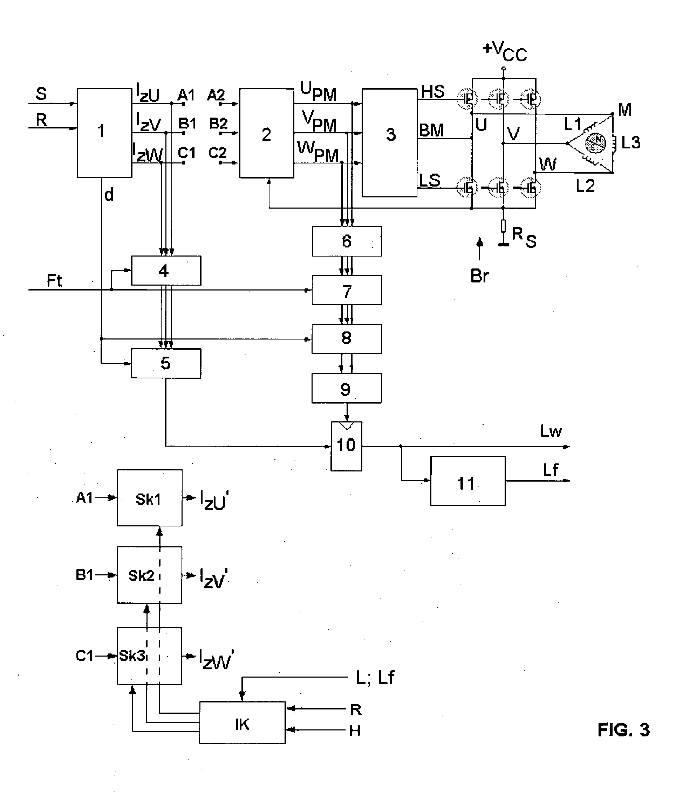

Figur 3 zeigt ein schematisches Blockschaltbild einer Schaltungsanordnung zur Durchführung des erfindungsgemäßen Verfahrens als Teil einer Schaltungsanordnung zur Ansteuerung eines 3-Phasen-Schrittmotors M mit drei Spulen L1, L2, L3, die in bekannter Weise in Dreieck- oder Sternschaltung oder auf andere Weise miteinander verschaltet und mit drei Motor-Spulenanschlüssen U, V und W verbunden sind. Die Motor-Spulenanschlüsse U, V, W werden in bekannter Weise über jeweils eine Leistungstreiber-Halbbrückenschaltung Br mit Strom aus einer Motor-Versorgungsspannungsquelle Vcc gespeist. Eine bekannte 3-Phasen-Motor-Treibereinheit 3 dient zur Ansteuerung der drei Leistungstreiber-Brückenschaltungen Br. Da diese Schaltungsteile in verschiedenen Formen allgemein bekannt sind, brauchen sie hier nicht weiter erläutert zu werden.

Die Motor-Treibereinheit 3 ist wiederum mit den Ausgängen eines an sich bekannten Choppers 2 (auch Chopper-Einheit oder Chopperschaltung genannt) verbunden, der zur Erzeugung der Chopper-Schaltsignale U_{PM}, V_{PM}, W_{PM} (üblicherweise PWM-Signale) dient, mit denen mittels der Motor-Treibereinheit 3 und den Leistungstreiber-Brückenschaltungen Br während der ON-Phasen die Spulenströme durch die Motor-Versorgungsspannung Vcc aktiv durch die Spulen L1, L2, L3 getrieben werden und mit denen die Spulen L1, L2, L3 zum aktiven Abbau der Spulenströme während der FD-Phasen sowie zum Kurzschließen der Spulen L1, L2, L3 während der SD-Phasen gemäß obigen Erläuterungen im Zusammenhang mit Figur 1 umgepolt bzw. kurzgeschlossen werden. Da der Chopper 2 und die Erzeugung der Chopper-Schaltsignale U_{PM}, V_{PM}, W_{PM} an sich ebenfalls bekannt ist, braucht darauf nicht näher eingegangen zu werden.

Wie bereits oben erwähnt wurde, wird dabei der tatsächliche, in den oder aus dem jeweils mit der Versorgungsspannung Vcc verbundenen Motor-Spulenanschluss U, V, W und durch die betreffende Motorspule fließende Motor-Spulenstrom vorzugsweise mittels eines Messwiderstandes Rs (und der an diesem dadurch abfallenden Spannung) im Fußpunkt der Brückenschaltungen Br erfasst und dem Chopper 2 zugeführt.

Die Schaltungsanordnung umfasst gemäß Figur 3 weiterhin einen bekannten Zielstrom-Sequenzer 1, mit dem in Abhängigkeit von zugeführten Eingangssignalen S, R, die eine gewünschte Drehrichtung und eine gewünschte Drehgeschwindigkeit bzw. Anzahl von Schritten des Motors darstellen, die in jeden Motor-Spulenanschluss U, V, W einzuprägenden Ziel- oder Sollstromwerte IzU, IzV, IzW erzeugt werden. Diese haben im Allgemeinen eine sinus- bzw. cosinus-Form, deren Amplituden, Frequenzen und Phasen zueinander in bekannter Weise so erzeugt werden, dass sich der Motor M in einer gewünschten Richtung und mit einer gewünschten Geschwindigkeit entsprechend der Eingangssignale S, R dreht.

Die Schaltungsanordnung umfasst weiterhin eine Zeitmesseinrichtung 6, der die Chopper-Schaltsignale U_{PM}, V_{PM}, W_{PM} zugeführt werden und mit der die Einschalt-Zeitdauern der positiven (oder negativen) aktiven Einschaltphasen der Chopper-Steuerung, d.h. die Zeitdauern der ON-Phasen (oder der FD-Phasen), für jeden der drei Motoranschlüsse U, V, W gemessen werden.

Diese gemessenen Zeitdauern werden dann einer ersten Filtereinheit 7 zugeführt, mit der diese gemessenen Einschalt-Zeitdauern gesondert für jeden der drei Motoranschlüsse U, V, W aufakkumuliert und wie oben beschrieben gemittelt werden, um die genannten drei gleitenden Mittelwerte der Einschalt-Zeitdauern zu berechnen. Die Filterzeitkonstante Ft der Filtereinheit 7 ist vorzugsweise mittels eines entsprechenden zugeführten Signals (Ft) einstellbar.

Diese drei gleitenden Mittelwerte werden dann einem ersten Phasenselektor 8 zugeführt, mit dem mithilfe eines von dem Zielstrom-Sequenzer 1 zugeführten Winkel-Signals d (Sextant-Signal) diejenigen zwei gleitenden Mittelwerte ausgewählt werden, für die gemäß der Drehrichtung des Motors der nächste Schnittpunkt in der Ansteuersequenz der Motor-Sollströme zu erwarten ist.

Diese beiden gleitenden Mittelwerte werden dann einem Schnittpunkt-Detektor 9 zugeführt, mit dem deren Schnittpunkt ermittelt und auf diese Weise der oben genannte fixe Zeitpunkt der beiden Motorspannungen festgelegt wird. Sobald dieser Zeitpunkt auftritt, erzeugt der Schnittpunkt-Detektor 9 ein Schaltsignal, das einem Steuereingang eines Latch 10 zu dessen Triggerung zugeführt wird.

Da dieser Schnittpunkt jedoch gemäß der obigen Erläuterung aufgrund der zeitlichen Filterung der Einschalt-Zeitdauern verzögert ist und somit der daraus ermittelte Lastwinkel einen Winkelfehler aufweisen würde, wird zur Erzeugung einer Referenz und zur Korrektur dieses Winkelfehlers vorzugsweise einer der beiden Soll-Spulenströme herangezogen, für die der Schnittpunkt der beiden dafür erzeugten Motorspannungen ermittelt wurde, und zwar, wie oben erläutert wurde, bevorzugt der vom Betrag her fallende Soll-Spulenstrom.

Zu diesem Zweck dient eine zweite, vorzugsweise einstellbare Filtereinheit 4, der die mit dem Zielstrom-Sequenzer 1 erzeugten und an dessen Ausgang anliegenden Ziel- oder Soll-Spulenströme IzU, IzV, IzW für die drei Motoranschlüsse U, V, W zugeführt werden. Diese zweite Filtereinheit 4 ist so ausgelegt, dass sie eine Filterzeitkonstante aufweist, mit der die Soll-Spulenströme IzU, IzV, IzW jeweils mit einer gleichen zeitlichen Verzögerung bzw. zeitlichen Filterung beaufschlagt werden, wie die erste Filtereinheit 7 die gleitenden Mittelwerte der Einschalt-Zeitdauern beaufschlagt. Die erste und die zweite Filtereinheit 7, 4 sind zu diesem Zweck vorzugsweise mit einer beiden Filtereinheiten 7, 4 zugeführten Filterzeitkonstante Ft einstellbar, die, wie oben erläutert wurde, z.B. in Abhängigkeit von der Drehzahl des Motors so gewählt oder erzeugt wird, dass sich ein möglichst hohes Signal/Rauschverhältnis ergibt.

Die auf diese Weise zeitlich gefilterten Soll-Spulenströme IzU, IzV, IzW werden dann einem zweiten Phasenselektor 5 zugeführt, mit dem wiederum mithilfe des von dem Zielstrom-Sequenzer 1 zugeführten Winkel-Signals d der oben genannte, vom Betrag her fallende Soll-Spulenstrom als Referenzstrom ausgewählt wird.

Der ausgewählte Referenzstrom wird vom Ausgang des zweiten Phasenselektors 5 einem Dateneingang des Latch 10 zugeführt. Sobald das Latch 10 durch den Schnittpunkt-Detektor 9 getriggert wird, wird das Referenzstromsignal an einen Lastwertausgang Lw der Schaltungsanordnung durchgeschaltet. In bekannter Weise kann dann daraus mittels der Arcus-Sinus-Funktion unmittelbar der Lastwert bzw. der Lastwinkel L berechnet werden.

Wie oben bereits erwähnt wurde, wird jedoch bevorzugt eine insbesondere arithmetische Mittelung mehrerer Lastwinkel L vorgenommen. Eine solche Mittelung erfolgt zum Beispiel mit einer dritten Filtereinheit 11 über eine Ansteuerperiode des Motors, so dass am Ausgang der dritten Filtereinheit 11 der genannte gefilterte bzw. gemittelte Lastwert bzw. Lastwinkel Lf anliegt.

Der ermittelte Lastwinkel L bzw. der gemittelte Lastwinkel Lf wird zum einen an jeweils einen Ausgang der Schaltungsanordnung geführt, um damit z.B. einen entsprechenden, den Lastwinkel oder die anliegende mechanische Motorlast darstellenden Messwert für einen Benutzer anzuzeigen oder den Lastwinkel für andere Messungen bzw. Auswertungen zur Verfügung zu stellen. Die auf diese Weise sensorlos erfasste Motorlast kann somit unabhängig von der damit vorgenommenen, lastwinkelabhängigen Motorstromregelung auch für andere Zwecke verwendet werden.

Zur erfindungsgemäßen Einstellung der Höhe der tatsächlichen Spulenströme in Abhängigkeit von dem gemäß der Erfindung sensorlos ermittelten Lastwinkel L oder dem gemittelten Lastwinkel Lf dient ein Stromregler Ik sowie ein erster, ein zweiter und ein dritter Skalierer Sk1, Sk2, Sk3, die jeweils durch den Stromregler Ik angesteuert werden und zur Skalierung der durch den Zielstrom-Sequenzer 1 erzeugten Ziel- oder Sollstromwerte IzU, IzV, IzW zwischen den Ausgang des Zielstrom-Sequenzers 1 und den Eingang des Choppers 2 geschaltet sind.

Der Stromregler Ik weist einen ersten Eingang für einen wie oben beschrieben ermittelten Lastwinkel L oder vorzugsweise einen gemittelten Lastwinkel Lf des Motors M, einen zweiten Eingang für eine untere Regelschwelle R und eine dritten Eingang für eine obere Regelschwelle H auf, die beide vorzugsweise von einem Benutzer oder auf andere Weise vorgegeben oder eingestellt werden können.

Der Stromregler Ik beinhaltet einen ersten Komparator zum Vergleichen des über den ersten Eingang zugeführten Lastwinkels L oder des gemittelten Lastwinkels Lf mit der über den zweiten Eingang zugeführten unteren Regelschwelle R, sowie einen zweiten Komparator zum Vergleichen des über den ersten Eingang zugeführten Lastwinkels L oder des gemittelten Lastwinkels Lf mit der über den dritten Eingang zugeführten oberen Regelschwelle H. Der Stromregler Ik umfasst ferner eine Schaltungseinheit, mit der anhand der Ausgangssignale der beiden Komparatoren gemäß obiger Erläuterung im Zusammenhang mit Figur 2 für jeden der drei Motorspulenanschlüsse U, V, W ein gemeinsamer Skalierwert erzeugt wird, der jeweils in Form eines Steuersignals dem ersten Skalierer Sk1, dem zweiten Skalierer Sk2 und dem dritten Skalierer Sk3 zugeführt wird.

Die Skalierer Sk1, Sk2, Sk3 weisen ferner jeweils einen Eingang A1, B1 bzw. C1 auf, an denen jeweils der mit dem Zielstrom-Sequenzer 1 erzeugte Ziel- oder Soll-Spulenstromwert IzU, IzV bzw. IzW anliegt. Mit den Skalierern Sk1, Sk2, Sk3 werden dann diese Ziel- oder Soll-Spulenstromwerte entsprechend der Skalierwerte skaliert, so dass am Ausgang der Skalierer jeweils ein skalierter, in den ersten Motor-Spulenanschluss U tatsächlich einzuprägender Spulenstromwert IzU', ein skalierter, in den zweiten Motor-Spulenanschluss V tatsächlich einzuprägender Spulenstromwert IzV' bzw. ein skalierter, in den dritten Motor-Spulenanschluss W tatsächlich einzuprägender Spulenstromwert IzW' anliegt, die jeweils dem entsprechenden Eingang A2, B2 bzw. C2 des Choppers 2 zur Erzeugung der Chopper-Schaltsignale U_{PM}, V_{PM}, W_{PM} zugeführt werden.

Durch die Skalierer Sk1, Sk2, Sk3 wird also der jeweils zugeführte vorgegebene Soll-Spulenstromwert IzU, IzV, IzW in Abhängigkeit von dem ermittelten Lastwinkel L (bzw. dem gemittelten Lastwinkel Lf) gemäß obigen Erläuterungen insbesondere im Zusammenhang mit Figur 2 entsprechend erhöht bzw. vermindert.

## Patentansprüche

1. Verfahren zur sensorlosen Motorlastwinkel- oder Lastwerterfassung bei einem Schrittmotor, bei dem mittels eines Chopper-Verfahrens aus zugeführten Soll-Spulenströmen (IzU, IzV, IzW) Chopper-Schaltsignale (U_{PM}, V_{PM}, W_{PM}) erzeugt werden, mit denen mittels einer Motor-Versorgungsspannung (Vcc) die Soll-Spulenströme in Motor-Spulenanschlüsse (U, V, W) eingeprägt werden, wobei der Lastwinkel bzw. der Lastwert eine gegeninduzierte Spannung (Gegen-EMK) in den Motorspulen erzeugt, **dadurch gekennzeichnet, dass** für jeden Motor-Spulenanschluss gleitende Mittelwerte der aktiven Einschalt-Zeitdauern von Chopperzyklen ermittelt werden und ein zeitlicher Schnittpunkt der Verläufe von zwei Motorspannungen an zwei Motor-Spulenanschlüssen (U, V, W) dann festgelegt wird, wenn die beiden für diese ermittelten gleitenden Mittelwerte zumindest im Wesentlichen gleich sind, und zum Zeitpunkt des Auftretens eines solchen Schnittpunktes eine durch die gegeninduzierte Spannung hervorgerufene Phasenverschiebung zwischen einer dieser beiden Motorspannungen und dem Spulenstrom an diesem Motor-Spulenanschluss erfasst und der Lastwinkel bzw. der Lastwert anhand dieser Phasenverschiebung ermittelt wird.

2. Verfahren nach Anspruch 1,
bei dem zur Ermittlung der gleitenden Mittelwerte die Zeitdauern der positiven oder der negativen aktiven Einschaltphasen der Chopperzyklen an mindestens zwei der Motor-Spulenanschlüsse gemessen und die gemessenen Einschalt-Zeitdauern mittels jeweils eines Akkumulators für jeden der Motoranschlüsse gesondert gemittelt werden.

3. Verfahren nach Anspruch 2,
bei dem die Mittelungen durch Summierung und anschließende Division durch die Anzahl der aufaddierten Einschalt-Zeitdauern vorgenommen werden, um eine Normierung in Form jeweils eines arithmetischen Mittelwertes zu erhalten.

4. Verfahren nach Anspruch 2,
bei dem die Mittelungen durch Addition jeweils einer Einschalt-Zeitdauer zu einem Akkumulatorinhalt und anschließende Subtraktion eines Bruchteils des Akkumulatorinhaltes vorgenommen werden.

5. Verfahren nach Anspruch 4,
bei dem die Subtraktion des Bruchteils eine zeitliche Filterung der Einschalt-Zeitdauern mit einer durch die Höhe des Bruchteils einstellbaren Filterzeitkonstante (Ft) darstellt, die in der Weise an eine Drehgeschwindigkeit des Motors angepasst wird, dass sich ein gewünschtes oder maximales Signal/Rauschverhältnis der gleitenden Mittelwerte ergibt.

6. Verfahren nach Anspruch 1,
bei dem zur Korrektur bzw. Kompensation einer durch die gleitende Mittelwertbildung hervorgerufenen zeitlichen Verzögerung des Schnittpunktes und eines damit verbundenen Fehlers der Phasenverschiebung einer der zugeführten Soll-Spulenströme (IzU, IzV, IzW) in gleicher Weise zeitlich verzögert und als Winkelreferenz verwendet wird.

7. Verfahren nach Anspruch 6,
bei dem zur Ermittlung der Phasenverschiebung zum Zeitpunkt der Detektion des Schnittpunktes der Soll-Spulenstrom für denjenigen Motor-Spulenanschluss ausgelesen wird, an dem die fallende der beiden sich schneidenden Motorspannungen anliegt.

8. Verfahren nach Anspruch 1,
bei dem ein gemittelter Lastwinkel durch arithmetische Mittelung von mehreren, jeweils an unterschiedlichen Schnittpunkten der Motorspannungen ermittelten Lastwinkeln berechnet wird.

9. Schaltungsanordnung zur sensorlosen Motorlastwinkel- oder Lastwerterfassung bei einem Schrittmotor mit einem Chopper (2), insbesondere zur Durchführung eines Verfahrens nach einem der Ansprüche 1 bis 8, **gekennzeichnet durch**:
- eine Zeitmesseinrichtung (6), mit der die Einschalt-Zeitdauern der aktiven Einschaltphasen, d.h. der ON- oder FD-Phasen, der Chopper-Steuerung für jeden der Motoranschlüsse gemessen werden,
- eine erste Filtereinheit (7), mit der gleitende Mittelwerte der gemessenen Einschalt-Zeitdauern erzeugt werden,
- einen ersten Phasenselektor (8) zur Auswahl derjenigen zwei gleitenden Mittelwerte, für die gemäß der Drehrichtung des Motors ein nächster Schnittpunkt zu erwarten ist, sowie
- einen Schnittpunkt-Detektor (9) zur Detektion des Zeitpunktes des Auftretens eines Schnittpunktes, bei dem der Lastwinkel oder Lastwert ermittelt wird.

10. Schaltungsanordnung nach Anspruch 9,
mit einer zweiten Filtereinheit (4), mit der zugeführte Soll-Spulenströme (IzU, IzV, IzW) mit einer gleichen zeitlichen Verzögerung bzw. zeitlichen Filterung beaufschlagt werden, wie die gleitenden Mittelwerte der Einschalt-Zeitdauern durch die erste Filtereinheit (7), wobei der Lastwinkel oder Lastwert anhand des zeitlich verzögerten Soll-Spulenstroms, der zum Zeitpunkt der Detektion des Schnittpunktes ausgelesen wird, ermittelt wird.

11. Schaltungsanordnung nach Anspruch 10,
mit einem zweiten Phasenselektor (5), mit dem der verzögerte Soll-Spulenstrom für denjenigen Motor-Spulenanschluss ausgelesen wird, an dem die fallende der beiden sich schneidenden Motorspannungen anliegt.

12. Schaltungsanordnung nach Anspruch 10,
mit einem Latch (10), das durch den Schnittpunkt-Detektor (9) getriggert wird, um den zeitlich verzögerten Soll-Spulenstrom auszulesen und dann daraus den Lastwinkel oder Lastwert zu ermitteln.

13. Verfahren zur Regelung eines Motorstroms bei einem Schrittmotor, bei dem ein Lastwinkel oder ein Lastwert des Motors gemäß einem Verfahren nach einem der Ansprüche 1 bis 8 ermittelt und der Motorstrom (I) in Abhängigkeit davon so geregelt wird, dass der Lastwinkel etwa 90° beträgt oder gerade keine Schrittverluste am Motor auftreten.

14. Verfahren nach Anspruch 13,
bei dem der Motorstrom (I) bei einer sich erhöhenden Motorlast schneller erhöht wird, als er bei einer sich vermindernden Motorlast vermindert wird.

15. Verfahren nach Anspruch 13,
bei dem eine obere Regelschwelle (H) festgelegt wird, bei der der Motorstrom (I) erhöht wird, wenn der Lastwinkel (L; Lf) die obere Regelschwelle (H) nach oben überschreitet, und eine untere Regelschwelle (R) festgelegt wird, bei der der Motorstrom (I) vermindert wird, wenn der Lastwinkel (L; Lf) die untere Regelschwelle (R) nach unten überschreitet.

16. Schaltungsanordnung zur Regelung eines Motorstroms bei einem Schrittmotor, mit einer Schaltungsanordnung nach einem der Ansprüche 9 bis 12 und/oder zur Durchführung eines Verfahrens nach einem der Ansprüche 13 bis 15, **gekennzeichnet durch**:
- einen Chopper (2) zur Erzeugung von Chopper-Schaltsignalen (U_{PM}, V_{PM}, W_{PM}) zur Einprägung von Soll-Spulenströmen mittels einer Motor-Versorgungsspannung (Vcc) in Motor-Spulenanschlüsse (U, V, W),
- einen dem Chopper (2) vorgeschalteten Skalierer (Sk1, Sk2, Sk3) zur Skalierung von zugeführten vorgegebenen Soll-Spulenströmen (IzU, IzV, IzW), sowie
- einen Stromregler (Ik) zur Erzeugung von Skalierwerten für die Skalierer (Sk1, Sk2, Sk3) aus einem zugeführten Wert eines Lastwinkels oder Lastwertes in der Weise, dass in die Motor-Spulenanschlüsse (U, V, W) skalierte Soll-Spulenströmen (IzU', IzV', IzW') eingeprägt werden, mit denen der Motor mit einem Lastwinkel in einem Bereich von etwa 90° oder in der Weise betrieben wird, dass gerade keine Schrittverluste am Motor auftreten.

17. Schaltungsanordnung nach Anspruch 16,
bei der der Stromregler (Ik) einen ersten Komparator für eine obere Regelschwelle (H) und einen zweiten Komparator für eine untere Regelschwelle (R) sowie Eingänge für Werte der unteren und der oberen Regelschwelle (R, H) zur Regelung des Motorstroms gemäß einem der Ansprüche 13 bis 15 aufweist.

## Claims

1. Method for sensor-free detection of a motor load angle or load value in a stepper motor, wherein chopper switch signals (U_{PM}, V_{PM}, W_{PM}) are generated from supplied target coil currents (IzU, IzV, IzW) by means of a chopper process, and wherein by means of the chopper switch signals the target coil currents are impressed into motor coil terminals (U, V, W) by means of a motor supply voltage (Vcc), wherein the load angle and the load value, respectively, generates a counter-induced voltage (CEMF) in the motor coils, **characterized in that** for each motor coil terminal sliding average values of the active switch-on temporal durations of chopper cycles are determined and a temporal intersecting point of the courses of two motor voltages at two motor coil terminals (U, V, W) is defined when the two sliding average values determined for these terminals are at least substantially equal, and that a phase shift between one of these two motor voltages and the coil current at this motor coil terminal caused by the counter-induced voltage is detected at the moment of the occurrence of such an intersecting point, and the load angle and the load value, respectively, is determined on the basis of this phase shift.

2. Method according to claim 1,
wherein for determining the sliding average values, the temporal durations of the positive or negative active switch-on phases of the chopper cycles are measured at at least two of the motor coil terminals, and the measured switch-on temporal durations are averaged separately for each of the motor terminals by means of each an accumulator.

3. Method according to claim 2,
wherein the averaging is conducted by addition and following division by the number of the added-up switch-on temporal durations, in order to obtain a scaling in the form of each an arithmetic average value.

4. Method according to claim 2,
wherein the averaging is conducted by addition of each one switch-on temporal duration to the content of the accumulator and following subtraction of a fraction of the content of the accumulator.

5. Method according to claim 4,
wherein the subtraction of the fraction represents a time-based filtering of the switch-on temporal durations with a filter-time-constant (Ft), which can be adjusted by the height of the fraction and is adapted to the rotating speed of the motor in such a way that a desired or a maximum signal to noise ratio of the sliding average values results.

6. Method according to claim 1,
wherein for correcting or compensating a delay in time of the intersecting point caused by the generation of the sliding average values, and a resulting fault in the phase shift, one of the supplied target coil currents (IzU, IzV, IzW) is delayed in time with the same amount and is used as an angle reference.

7. Method according to claim 6,
wherein for determining the phase shift at the moment of the detection of the intersecting point, the target coil current for the one of the motor coil terminals is read-out, at which the decreasing one of the two motor voltages occurs which are intersecting each other.

8. Method according to claim 1,
wherein an averaged load angle is calculated by arithmetically averaging of several load angles which are each determined at different intersecting points of the motor voltages.

9. Circuit arrangement for sensor-free detection of a motor load angle or load value in a stepper motor, by means of a chopper (2), especially for conducting a method according to one of claims 1 to 8, **characterized in**:
- a time measurement device (6) for measuring switch-on temporal durations of the active switch-on phases, i.e. of ON- or FD-phases, of the chopper control for each of the motor terminals,
- a first filter unit (7) for generating sliding average values of the measured switch-on temporal durations,
- a first phase selector (8) for selecting those two sliding average values, for which a next intersecting point is to be expected due to the direction of rotation of the motor, and
- an intersecting point detector (9) for detecting the moment of the occurrence of an intersecting point, at which the load angle or load value is determined.

10. Circuit arrangement according to claim 9,
comprising a second filter unit (4) for exposing supplied target coil currents (IzU, IzV, IzW) to the same delay in time or filtering in time, as the sliding average values of the switch-on temporal durations are delayed by the first filter unit (7), wherein the load angle or load value is determined on the basis of the temporally delayed target coil current which is read out at the moment of the detection of the intersecting point.

11. Circuit arrangement according to claim 10,
comprising a second phase selector (5) for reading out the delayed target coil current for the one of the motor coil terminals, at which the decreasing one of the two motor voltages occurs which are intersecting each other.

12. Circuit arrangement according to claim 10,
comprising a latch (10) which is triggered by the intersecting point detector (9), in order to read out the temporally delayed target coil current and then to determine from this the load angle or the load value.

13. Method for adjusting a motor current in a stepper motor, in which a load angle or a load value of the motor is determined by a method according to one of claims 1 to 8, and in which the motor current (I) is adjusted in dependence thereon such that the load angle amounts about 90°, or such that just no step losses occur at the motor.

14. Method according to claim 13,
wherein the motor current (I) is increased in case of an increasing motor load faster than it is decreased in case of a decreasing motor load.

15. Method according to claim 13,
in which an upper regulation threshold (H) is defined at which the motor current (I) is increased when the load angle (L; Lf) exceeds the upper regulation threshold (H) in a direction upwards, and in which a lower regulation threshold (R) is defined, at which the motor current (I) is decreased, when the load angle (L; Lf) exceeds the lower regulation threshold (R) in a direction downwards.

16. Circuit arrangement for adjusting a motor current in a stepper motor, comprising a circuit arrangement according to one of claims 9 to 12, and/or for conducting a method according to one of claims 13 to 15, **characterized in**:
- a chopper (2) for generating chopper switch signals (U_{PM}, V_{PM}, W_{PM}) for impressing target coil currents into motor coil terminals (U, V, W) by means of a motor supply voltage (Vcc),
- scaling units (Sk1, Sk2, Sk3) connected upstream of the chopper (2), for scaling supplied predetermined target coil currents (IzU, IzV, IzW), and
- a current regulator (Ik) for generating scaling values for the scaling units (Sk1, Sk2, Sk3) from a supplied value of a load angle or a load value in such a manner that scaled target coil currents (IzU', IzV', IzW') are impressed into the motor coil terminals (U, V, W) for operating the motor at a load angle in a range of about 90° or in such a manner that just no step losses occur at the motor.

17. Circuit arrangement according to claim 16,
wherein the current regulator (Ik) comprises a first comparator for an upper regulation threshold (H), a second comparator for a lower regulation threshold (R) and inputs for values of the lower and the upper regulation threshold (R, H) for adjusting the motor current according to one of claims 13 to 15.

## Revendications

1. Procédé pour la détection sans capteur de l'angle de charge du moteur ou de la valeur de charge pour un moteur pas à pas, dans lequel on produit, au moyen d'un procédé de découpage à partir de courants de bobine de consigne fournis (IzU, IzV, IzW), des signaux de commutation découpés (U_{PM}, V_{PM}, W_{PM}), avec lesquels on applique les courants de bobine de consigne à des bornes de bobine du moteur (U, V, W) au moyen d'une tension d'alimentation du moteur (Vcc), dans lequel l'angle de charge ou la valeur de charge produit une contre-tension induite (force contre-électromotrice - FCEM) dans les bobines du moteur, caractérisé en ce l'on détermine pour chaque borne de bobine du moteur des valeurs moyennes glissantes des durées temporelles de connexion de cycles de découpage et on définit un point d'intersection temporel des courbes de deux tensions du moteur à deux bornes de bobines du moteur (U, V, W) lorsque les deux valeurs moyennes glissantes déterminées pour celles-ci sont au moins essentiellement égales et, au moment de la génération d'un tel point d'intersection, on détecte un déphasage provoqué par la contre-tension induite entre une de ces deux tensions du moteur et le courant de bobine à cette borne de bobine du moteur et on détermine l'angle de charge ou la valeur de charge à l'aide de ce déphasage.

2. Procédé selon la revendication 1,
dans lequel, pour la détermination des valeurs moyennes glissantes, on mesure les durées temporelles des phases de connexion actives positives ou négatives des cycles de découpage à au moins deux des bornes de bobines du moteur et on calcule les moyennes des durées temporelles de connexion mesurées, séparément pour chacune des bornes du moteur au moyen d'un accumulateur respectif.

3. Procédé selon la revendication 2,
dans lequel on effectue les calculs de moyennes par sommation et ensuite division par le nombre des durées temporelles de connexion additionnées, afin d'obtenir une normalisation sous la forme d'une valeur moyenne arithmétique respective.

4. Procédé selon la revendication 2,
dans lequel on effectue les calculs de moyennes par addition chaque fois d'une durée temporelle au contenu d'un accumulateur et ensuite soustraction d'une fraction du contenu de l'accumulateur.

5. Procédé selon la revendication 4,
dans lequel la soustraction de la fraction représente un filtrage temporel des durées de connexion avec une constante de tempe de filtre (Ft) réglable par la hauteur de la fraction, qui est adaptée à la vitesse de rotation du moteur d'une manière telle qu'il en résulte un rapport signal/bruit désiré ou maximal des valeurs moyennes glissantes.

6. Procédé selon la revendication 1,
dans lequel, pour la correction ou la compensation d'un retard temporel du point d'intersection provoqué par le calcul de moyennes glissantes et d'une erreur correspondante du déphasage, on retarde temporellement de la même manière un des courants de bobine de consigne fournis (IzU, IzV, IzW) et on l'utilise comme référence angulaire.

7. Procédé selon la revendication 6,
dans lequel, pour la détermination du déphasage au moment de la détection du point d'intersection, on lit le courant de bobine de consigne pour la borne de bobine du moteur à laquelle est appliquée la tension descendante des deux tensions du moteur qui se coupent.

8. Procédé selon la revendication 1,
dans lequel on calcule un angle de charge moyen en formant la moyenne arithmétique de plusieurs angles de charge déterminés respectivement à différents points d'intersection des tensions du moteur.

9. Circuiterie pour la détection sans capteur de l'angle de charge ou de la valeur de charge du moteur pour un moteur pas à pas avec un découpeur (2), en particulier pour la mise en oeuvre du procédé selon l'une quelconque des revendications 1 à 8, **caractérisée par**:
- un dispositif de mesure du temps (6), avec lequel on mesure les durées temporelles de connexion des phases de connexion actives, c'est-à-dire les phases ON ou FD, de la commande de découpeur pour chacune des bornes du moteur,
- une première unité de filtre (7), avec laquelle on produit les valeurs moyennes glissantes des durées temporelles de connexion mesurées,
- un premier sélecteur de phase (8), pour le choix des deux valeurs moyennes glissantes, pour lesquelles un prochain point d'intersection doit être attendu en fonction du sens de rotation du moteur, ainsi que
- un détecteur de point d'intersection (9), pour la détection de l'instant de la génération d'un point d'intersection, pour lequel on détermine l'angle de charge ou la valeur de charge.

10. Circuiterie selon la revendication 9,
avec une deuxième unité de filtre (4), avec laquelle des courants de bobines de consigne fournis (IzU, IzV, IzW) sont affectés du même retard temporel ou du même filtrage temporel que les valeurs moyennes glissantes des durées temporelles de connexion par l'unité de filtre (7), dans laquelle on détermine l'angle de charge ou la valeur de charge à l'aide du courant de bobine de consigne temporellement retardé, qui est lu à l'instant de la détection du point d'intersection.

11. Circuiterie selon la revendication 10,
avec un deuxième sélecteur de phase (5), avec lequel on lit le courant de bobine de consigne retardé pour la borne de bobine de moteur à laquelle est appliquée la tension descendante des deuxtensions du moteur qui se coupent.

12. Circuiterie selon la revendication 10,
avec un verrou (10), qui est déclenché par le détecteur de point d'intersection (9), afin de lire le courant de bobine temporellement retardé et de déterminer ensuite à partir de celui-ci l'angle de charge ou la valeur de charge.

13. Procédé pour la régulation d'un courant de moteur dans un moteur pas à pas, dans lequel on détermine un angle de charge ou une valeur de charge du moteur par un procédé selon l'une quelconque des revendications 1 à 8 et on régule le courant de moteur (I) en fonction de celui-ci/celle-ci, de telle manière que l'angle de charge vaille environ 90° ou qu'il ne se produise aucune perte de pas au moteur.

14. Procédé selon la revendication 13,
dans lequel on augmente le courant de moteur (I) lors d'une augmentation de la charge du moteur, plus rapidement qu'on le diminue lors d'une diminution de la charge du moteur.

15. Procédé selon la revendication 13,
dans lequel on définit un seuil de régulation supérieur (H), pour lequel on augmente le courant de moteur (I) lorsque l'angle de charge (L; Lf) franchit vers le haut le seuil de régulation supérieur (H), et un seuil de régulation inférieur (R), pour lequel on diminue le courant de moteur (I) lorsque l'angle de charge (L; Lf) franchit vers le bas le seuil de régulation inférieur (R).

16. Circuiterie pour la régulation d'un courant de moteur dans un moteur pas à pas, avec une circuiterie selon l'une quelconque des revendications 9 à 12 et/ou pour la mise en oeuvre d'un procédé selon l'une quelconque des revendications 13 à 15, **caractérisée par**:
- un découpeur (2), pour la production de signaux de commutation découpés (U_{PM}, V_{PM}, W_{PM}) pour l'application de courants de bobine de consigne au moyen d'une tension d'alimentation du moteur (Vcc) à des bornes de bobines de moteur (U, V, W),
- un calibreur (Sk1, Sk2, Sk3) précédant le découpeur (2) pour le calibrage de courants de bobines de consigne prédéterminés fournis (IzU, IzV, IzW), ainsi que
- un régulateur de courant (Ik), pour la production de valeurs de calibrage pour le calibreur (Sk1, Sk2, Sk3) à partir d'une valeur fournie d'un angle de charge ou d'une valeur de charge, d'une manière telle que des courants de bobines de consigne calibrés (IzU', IzV', IzW') soient appliqués aux bornes de bobines du moteur (U, V, W), avec lesquels le moteur fonctionne avec un angle de charge dans une zone d'environ 90° et d'une manière telle qu'il ne se produise pas de perte de pas dans le moteur.

17. Circuiterie selon la revendication 16,
dans laquelle le régulateur de courant (Ik) présente un premier comparateur pour un seuil de régulation supérieur (H) et un deuxième comparateur pour un seuil de régulation inférieur (R) ainsi que des entrées pour des valeurs des seuils de régulation inférieur et supérieur (R, H) pour la régulation du courant de moteur selon l'une quelconque des revendications 13 à 15.
